(19) Europäisches Patentamt
European Patent Office
Office européen des brevets

(11) EP 0 957 419 A1

(12) **EUROPEAN PATENT APPLICATION**

(43) Date of publication:
17.11.1999 Bulletin 1999/46

(51) Int. Cl.⁶: **G05D 23/02**, F24H 9/12

(21) Application number: 99109077.0

(22) Date of filing: 07.05.1999

(84) Designated Contracting States:
AT BE CH CY DE DK ES FI FR GB GR IE IT LI LU MC NL PT SE
Designated Extension States:
AL LT LV MK RO SI

(30) Priority: 12.05.1998 GB 9810148

(71) Applicant: **Alpha Therm Ltd.**
Swanley, Kent BR8 8EX (GB)

(72) Inventor: **Sivill, Alistair**
**Bickley, Bromley, Kent BR1 2AR (GB)**

(74) Representative:
**Frankland, Nigel Howard**
**FORRESTER & BOEHMERT**
**Franz-Joseph-Strasse 38**
**80801 München (DE)**

(54) **Improvements in or relating to a water heating arrangement**

(57) In a water heating arrangement incorporating a heater (1) having a heat exchanger (2) to heat water from a source of cold water (4), a thermostatically controlled valve (7) is provided adapted to control the flow rate of water through the heat exchange (r) in dependence upon the temperature of the water from the source of cold water (4). The valve (7) provides a relatively low flow rate at a relatively low temperature, and a relatively high flow rate at a relatively high temperature.

FIG 2.

EP 0 957 419 A1

## Description

**THE PRESENT INVENTION** relates to a water heating arrangement, and more particularly relates to a water heating arrangement of the type in which cold water, for example from a mains supply, is passed through a heat exchanger within a heater, in which thermal energy is added to the water, thus increasing the temperature of the water, and the water is then discharged, for example through a hot water tap.

Various types of heater that fulfil this function have been provided before, including an electrically powered instantaneous water heater, and also a gas "combination" boiler, which not only provides hot water in the manner described above, but which also supplies thermal energy to a central heating system.

The heater discussed above take water, for example from the mains supply, and add energy to the water, thereby raising the temperature of the water. For a given power rating of the heater, the temperature of the water will be raised, by a certain amount, depending upon the flow rate of the water through the heat exchanger. As the flow rate of water through the heat exchanger rises, so the final temperature of the water falls. Conversely as the flow rate through the heat exchanger falls, so the final temperature of the water rises.

A domestic water heater should ideally raise the temperature of the water to an acceptable temperature for domestic use. Such a temperature is, typically, approximately 50°C. A typical heater has a flow rate flow restrictor, sent to restrict the flow rate of water through the heater so that the minimum temperature of water discharged from the heater has a predetermined temperature of, typically, 50°C. The fixed flow restrictor is specified so that, in the winter months, when the typical temperature of mains water is about 5°C, the desired output temperature is achieved.

In summer, however, the temperature of a mains water supply may be approximately 20°C. Consequently, the heater could take a greater water flow to the necessary temperature for domestic use that is permitted by the fixed flow restrictor.

The present invention seeks to provide an improved water heating arrangement.

According to this invention there is provided a water heating arrangement, the water heating arrangement incorporating a heater having a heat exchanger, the heat exchanger having an inlet adapted to receive water from a source of cold water and having an outlet adapted to discharge hot water, the heater incorporating means to apply thermal energy to the heat exchanger to raise the temperature of water within the heat exchanger, the arrangement incorporating a thermostatically controlled valve, the thermostatically controlled valve being adapted to control the flow rate of water through the heat exchanger in dependence upon the temperature of the water from the source of cold water and comprising a wax thermostat mounted between the source of cold water and the inlet of the heat exchanger within the inlet pipe, the wax thermostat comprising a housing associated with a rod, the rod projecting from one end of the housing, the thermostat being associated with a valve member which is provided at said one end of the housing, and a spring, the wax thermostat and the spring biasing the valve member towards the valve seat and co-operating to move the valve member towards the valve seat in response to a relatively low water temperature, and to move the valve member away from the valve seat in response to a relatively high water temperature, and extending through an orifice defined by a valve seat and engaging an abutment on the far side of the orifice, the arrangement providing a relatively low flow rate at a relatively low temperature, and a relatively high flow rate at a relatively high temperature.

Preferably the valve is so designed that the temperature of water exiting the heat exchanger is within a predetermined narrow temperature range when the temperature of the water supplied to the heat exchanger is predetermined within a wide temperature range.

Conveniently the wide temperature range is from 5°C to 20°C.

In order that the invention may be more readily understood, and so that further features thereof may be appreciated, the invention will now be described, by way of example, with reference to the accompanying drawings in which

FIGURE 1 is a diagrammatic view of a water heating arrangement in accordance with the invention, and

FIGURE 2 is an enlarged view of a valve forming part of the arrangement shown in Figure 1.

The water heating arrangement in accordance with the invention comprises a heater incorporating a heat exchanger to enable thermal energy to be added to water flowing directly from a mains supply to a hot water tap. The arrangement also includes a valve which adjusts the maximum flow rate of water through the heat exchanger in dependence upon the temperature of the water flowing into the heat exchanger. Thus, if the temperature of the water flowing into the heat exchanger is relatively high, the flow rate is increased, whereas if the temperature of the water is low, the flow rate is reduced. This provides a substantially constant temperature for the water flowing from the heat exchanger, regardless of the temperature of the water supplied to the heat exchanger.

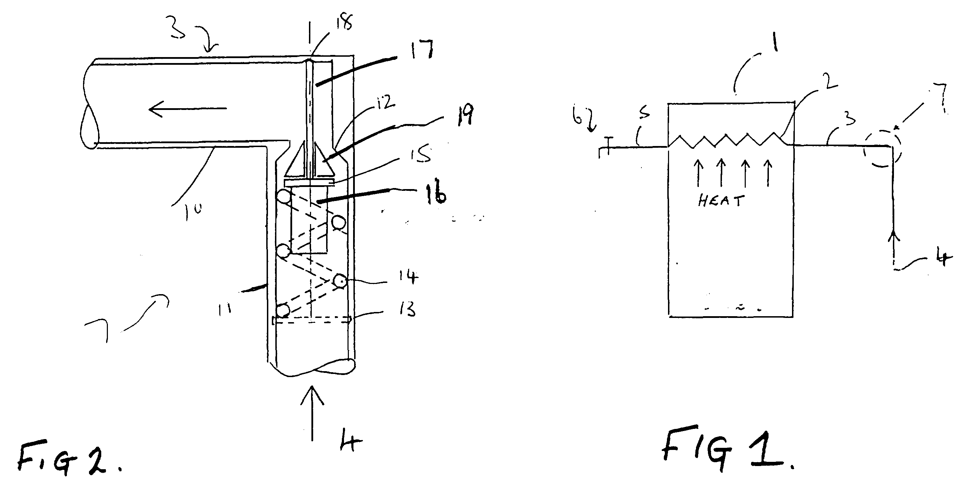

Referring initially to Figure 1 of the accompanying drawings, a heating arrangement for heating water incorporates a heater 1. Contained within the heater is a heat exchanger 2. The input side of the heat exchanger 2 is connected, by means of a supply pipe 3, to a cold water supply 4, which may be the mains cold water supply. The output of the heater exchanger 2 is connected, by means of a pipe 5 to an outlet such as a hot water tap 6.

The heater 1 incorporates a heat source adapted to apply heat to the heat exchanger 2 to impart thermal energy to water within the heat exchanger 2. The heat source may comprise an electric heating element, or an oil or gas burner.

Incorporated in the supply pipe 3, between the cold water supply 4 and the input to the heat exchanger 2, is a thermostatically controlled valve 7 adapted to control the flow rate of water into the heat exchanger 2 in dependence upon the temperature of the water from the cold water supply 4. The valve 7 is illustrated in greater detail in Figure 2.

The valve 7 is provided in part of the supply pipe 3 which is cranked to form two arms 10,11, which extend perpendicularly to each other. At the point where the arm 11 joins with the arm 10, a conical seat 12 is formed within the arm 11, which surrounds a passage inter-connecting the two arms. At a point spaced from the conical seat the arm 11 defines, on its interior surface, an internal annular groove 13 which accommodates a circlip, or the like. The circlip is engaged by one end of a compression spring 14. The other end of the compression spring engages a flange 15 provided at one end of a housing 16 which comprises the body of a wax thermostat. An elongate rod 17 extends from the body 16 of the wax thermostat and passes through the central passage defined within the conical seat 12, engaging a recess 18 provided in the side wall of the arm 10 of the pipe or conduit 3. Surrounding the rod 17, and located adjacent the flange 15, is a tapering valve element 19.

The body 16 of the wax thermostat is located within the final turns of the helical spring 14.

It is to be appreciated that when the temperature of water from the cold water supply is relatively low, the wax material within the housing 16 of the wax thermostat will contract, thus drawing the rod 17 into the housing, and consequently moving the valve member 19 to a position closely adjacent the seat 12. Thus the flow rate of water through the valve will be restricted. However, when the temperature of water from the cold water supply 4 is relatively high, the wax material within the housing 16 will expand, consequently increasing the length of the rod 17 that projects from the housing 16, causing the housing 16, and the associated flange 15 to move away from the seat 12 against the bias provided by the spring 14. This will move the valve member 19 away from the seat 12, thus increasing the flow rate of water through the supply pipe 3 to the heat exchanger 2.

Thus, when the mains water has a low temperature, for example during the winter months, the flow rate through the heater will be relatively low, meaning that the water will be heated to an appropriate final temperature whereas, in the summer months, when the temperature of water from the mains supply is relatively high, the flow rate of water through the valve, and thus through the heat exchanger, will be higher and again, the water will be heated to substantially the same fixed temperature.

If the temperature of the water from the mains supply is at an intermediate value, then the valve will provide an intermediate flow rate. The water will still be heated to substantially the same fixed temperature.

It is to be appreciated that the valve will be designed to provide a substantially constant output temperature for the water emerging from the heat exchanger 2, regardless of the temperature of the water from the cold water 4.

It is to be envisaged that in utilising a control valve of the type discussed above, the possible gain in flow rate of water passing through the boiler during the summer months will be very significant.

For example, for a given power rating of water heat (P), and assuming that the water is to be raised to a temperature of 50°C, the maximum water flow rate (F) depends upon the mains supply temperature (T°C) as follows:

$$F = \frac{KP}{(50\text{-}T)}$$

where K is a constant.

In winter, with the flow rate (FW) where T = 5°C is

$$FW = \frac{KP}{50\text{-}5} = \frac{KP}{45}$$

In the summer the flow rate (FS) with T = 20°C is:

$$FS = \frac{KP}{50\text{-}20} = \frac{KP}{30}$$

The ratio of the flow rate in summer to the flow rate in winter is:

$$\frac{FS}{FW} = \frac{KP}{30} \div \frac{KP}{45} = \frac{45}{30} = 1.5$$

Thus, the maximum flow rate in the summer can be 50% more than the maximum flow rate in winter.

It is to be appreciated that a criticism that is made of many instantaneous gas or electric domestic water heaters is the slow flow rate, which can be a disadvantage when, for example, filling a bath. It is to be appreciated that the present invention enables the flow rate of optimised, providing the highest possible flow rate for any particular temperature of the water from the mains supply.

While in the example given above the thermostatically controlled valve 7 is provided at a cranked part of the supply pipe, in an alternative embodiment the valve maybe provided in a linear part of the pipe provided with means defining an abutment to engage the rod of the thermostat.

The features disclosed in the foregoing description, in the following Claims and/or in the accompany drawings may, both separately and in any combination thereof, be material for realising the invention in diverse forms thereof.

## Claims

1. A water heating arrangement, the water heating arrangement incorporating a heater having a heat exchanger, the heat exchanger having an inlet adapted to receive water from a source of cold water and having an outlet adapted to discharge hot water, the heater incorporating means to apply thermal energy to the heat exchanger to raise the temperature of water within the heat exchanger, the arrangement incorporating a thermostatically controlled valve, the thermostatically controlled valve being adapted to control the flow rate of water through the heat exchanger in dependence upon the temperature of the water from the source of cold water and comprising a wax thermostat mounted between the source of cold water and the inlet of the heat exchanger within the inlet pipe, the wax thermostat comprising a housing associated with a rod, the rod projecting from one end of the housing, the thermostat being associated with a valve member which is provided at said one end of the housing, and a spring, the wax thermostat and the spring biasing the valve member towards the valve seat and co-operating to move the valve member towards the valve seat in response to a relatively low water temperature, and to move the valve member away from the valve seat in response to a relatively high water temperature, and extending through an orifice defined by a valve seat and engaging an abutment on the far side of the orifice, the arrangement providing a relatively low flow rate at a relatively low temperature, and a relatively high flow rate at a relatively high temperature.

2. An arrangement according to Claim 1 wherein the valve is so designed that the temperature of water exiting the heat exchanger is within a predetermined narrow temperature range when the temperature of the water supplied to the heat exchanger is predetermined within a wide temperature range.

3. An arrangement according to Claim 2 wherein the wide temperature range is from 5°C to 20°C.

FIG 1.

FIG 2.

| | **European Patent Office** | **EUROPEAN SEARCH REPORT** | **Application Number** EP 99 10 9077 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PATENT ABSTRACTS OF JAPAN<br>vol. 7, no. 110 (M-214),<br>13 May 1983 (1983-05-13)<br>& JP 58 031249 A (NORITSU K.K.),<br>23 February 1983 (1983-02-23)<br>* abstract * | 1-3 | G05D23/02<br>F24H9/12 |
| Y | CH 515 553 A (G.F. GERDTS KG)<br>15 November 1971 (1971-11-15)<br>* figures 1-4 * | 1-3 | |
| A | GB 2 281 380 A (TRITON PLC)<br>1 March 1995 (1995-03-01)<br>* page 1, line 17 - line 27 *<br>* page 3, line 11 - line 22; figures 1,2 * | 1 | |
| | | | **TECHNICAL FIELDS SEARCHED (Int.Cl.6)**<br><br>G05D<br>F24H |

The present search report has been drawn up for all claims

| Place of search | Date of completion of the search | Examiner |
|---|---|---|
| THE HAGUE | 20 August 1999 | Goetz, P |

**ANNEX TO THE EUROPEAN SEARCH REPORT
ON EUROPEAN PATENT APPLICATION NO.**

EP 99 10 9077

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-1999

| Patent document cited in search report | | Publication date | Patent family member(s) | | Publication date |
|---|---|---|---|---|---|
| JP 58031249 | A | 23-02-1983 | NONE | | |
| CH 515553 | A | 15-11-1971 | DE | 2026493 A | 09-12-1971 |
| | | | FR | 2091020 A | 14-01-1972 |
| | | | GB | 1284209 A | 02-08-1972 |
| GB 2281380 | A | 01-03-1995 | NONE | | |

EPO FORM P0459

For more details about this annex : see Official Journal of the European Patent Office, No. 12/82